# EUROPEAN PATENT APPLICATION

(11) **EP 2 851 231 A1**
(43) Date of publication of application: **25.03.2015**
(21) Application number: 14185466.1
(22) Date of filing: 19.09.2014
(51) Int. Cl.: B60K 15/04, E05B 47/00, B65D 55/14, B65D 50/06

(54) **Plug for tank**

(30) Priority: 20.09.2013 IT TV20130146
(71) Applicant: Lightech s.r.l., 31025 Santa Lucia di Piave (TV) (IT)
(72) Inventor: Furlan, Fabrizio, 31025 Santa Lucia di Piave (TV) (IT)
(74) Representative: Citron, Massimiliano

(57) **Abstract**

To improve the performance and ease of closing, it is described a method for enabling or disabling a closing mechanism (30, 40) of a plug (20) on a container or tank, e.g. of a vehicle, wherein an electromagnetic field controls the mechanism.

## Description

The invention relates to a plug for a container or tank, e.g. of a vehicle, where the plug comprises a closure mechanism on the tank or container. The invention also relates to a control method of the plug.

We consider in the following the example of a tank for a vehicle, e.g. a motorcycle, without any intention to be understood that there are foreclosures for other types of vehicles (e.g. automobiles, trucks, trains, planes).

It is well known that motorcycles, or heavy-duty vehicles, have very large tanks of fuel equipped with a plug placed in sight, the plug being removable for refueling. Plugs of this kind are lockable by screwing or pressure, but in recent and/or advanced models they have a key-lock. The purpose, especially in sport motorcycles, is to avoid tampering or theft of fuel tank (or of the plug itself).

The locks are mechanical, with cylinder, keyhole, and latch operated by the teeth of a key.

Not only, for reasons of cost and size, these locks are simple and easily broken open, but the keyhole can fill with dirt (e.g. consider a racing cycle or a vehicle exposed to weathering) and/or jam with shocks (e.g. consider a racing motorcycle) and/or rust by the rain, thereby preventing proper operation of the plug.

Obviating e.g. to one or more of these problems is the object of the invention, and this is the advantageous effect of what is attached herein in the claims, wherein the dependent ones define advantageous variants.

It is proposed a method for enabling or disabling a closing mechanism of a plug on a container or tank, e.g. of a vehicle, wherein an electromagnetic field controls the mechanism or an electromagnetic field is used to control the mechanism.

The action at a distance of the field allows e.g.
- to avoid the keyhole (receptacle of dirt and subject to mechanical breakage), and/or
- to simplify the structure of the lock by making it more robust (the classical mechanisms with drum and pins are subject to mechanical breakage and wear), and/or
- to achieve greater opening combinations thereby improving the safety, and/or
- to simplify the opening operations by eliminating the insertion of the key in the lock (often the user's hands are busy or is a hurry to fuel, such as in racing).

Also one can avoid keys with teeth or notches, which can break in the long period, wear out or deteriorate and require replacement of the key.

For *electromagnetic field* is meant here overall any type of field as described or describable by the Maxwell equations: mainly electric, magnetic or a combination of the two. The field can be static or variable, like light or radio waves.

Preferably a quasi-static field is used, in order to avoid oscillator circuits or generators. An electrostatic field, generated e.g. by a polarization or charge separation, and/or a magnetic field, generated e.g. by a permanent magnet, allow to simplify the overall structure of the plug and its lock.

To operate the mechanism one can e.g. take advantage of attractive and/or repulsive forces of magnetic/electric induction or between magnetic poles or between electric charges.

In particular, for constructive simplicity and effectiveness, it is preferred to use a movable member to enable or disable (e.g. lock or unlock) the plug.

The field can act directly on such member to move it from a closing position to an opening position, and/or vice versa. Or the field can act indirectly: the field acts on a restrain and/or thrust and/or retention and/or release and/or traction actuator member of said movable member, in order to enable/disable one or more degrees of movement freedom thereof, e.g. locking it in one position or enabling/disabling its displacement for opening/closing of the plug. There may also be a kinematic chain between the movable member and the actuator member.

The movable and/or actuator element can be associated with an elastic element, e.g. a spring, to return it in one of the two positions: closed or open position (detachment from the tank or container) of the plug.

To command the mechanism one can use a light sensor or a receiver of radio waves, by which the presence or an encoding in the received electromagnetic field can be detected. If the field or signal so received meets certain requirements, the plug is opened and/or closed (or locked/unlocked to/from the container or tank).

The source of the field can be present in an external accessory, as a "key" without lock, and/or inside the plug. If the plug is associated with the external command accessory (key) for opening/closing it, such accessory can contain e.g. permanent magnets and/or an accumulation or separation of electrical charges able to generate in the space static electric or magnetic fields. Upon moving the accessory neat the plug, the field comes to the mechanism and influences it, e.g. by attracting or pushing said movable member or said actuator member.

It is also proposed a plug for tank vehicle comprising a closing mechanism, wherein the mechanism is controllable by an electromagnetic field.

Variants of the plug can be considered those described here for the method, that is, e.g.:
the mechanism is controllable by a nearly static field; and/or comprises
a movable member adapted to enable or disable (or lock or unlock), the plug (the movable member is displaceable between a closing position and an opening position, and/or vice versa), and/or comprises
a restrain and/or thrust and/or retention and/or release and/or traction actuator member of said movable member, adapted to enable/disable one or more degrees of movement freedom of the movable member, e.g. by locking it in one position or enabling/ disabling its displacement for opening/closing the plug, and/or comprises
a kinematic chain between the movable member and the actuator element; and/or comprises
an elastic element, e.g. a spring, associated with the movable and/or actuator member adapted to return it to one of two positions: closing or opening (detachment from the tank or container) of the plug; and/or
the mechanism comprises a light sensor or a radio waves receiver, by which it detects the presence or an encoding in the received electromagnetic field.

Another inventive aspect is an accessory external to the plug, a sort of "key" functioning without lock, as described above.

Another aspect of the invention is a kit of parts comprising the plug as defined here and the accessory, in all their variants.

Another aspect of the invention is the use of an electromagnetic field, in all the variants described here, to open/close a plug on a tank or container. In particular it is proposes the use of an electromagnetic field to control the closing mechanism of the plug.

The advantages of the invention will be more apparent from the following description of a preferred embodiment of device, reference being made to the attached drawing wherein
Fig. 1 shows a kit/assembly of plug and flange for a tank in a three-dimensional view;
Fig. 2 shows the plug seen from below;
Fig. 3 shows the plug seen from the side;
Fig. 4 shows a cross-section of the plug according to the plane A-A.

In the following figures, identical numbers indicate equal parts.

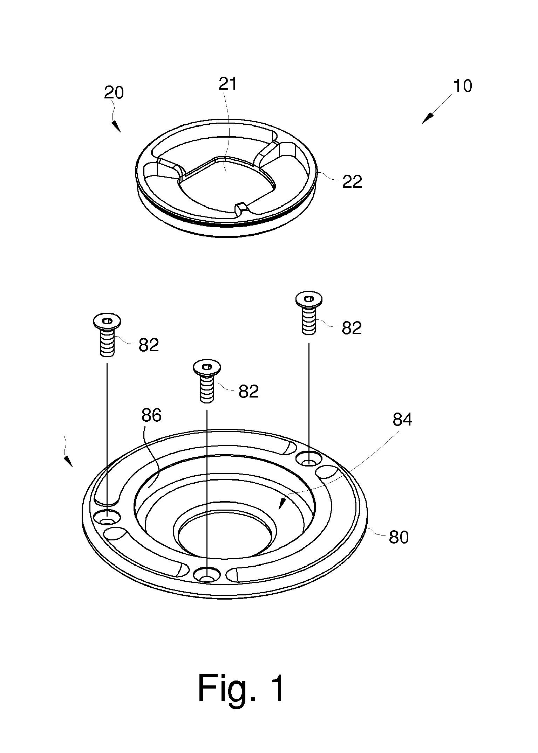

In fig. 1 there is visible a plug 20 insertable and lockable by command in a flange 80 that can be fixed e.g. to a tank, e.g. of a motorcycle, by screws 82. The flange 80 has a cavity of cylindrical shape for receiving the body of the plug 20. In the walls of the cavity 84 there is a peripheral groove 86, e.g. like a thread, in which the plug 20 can anchor.

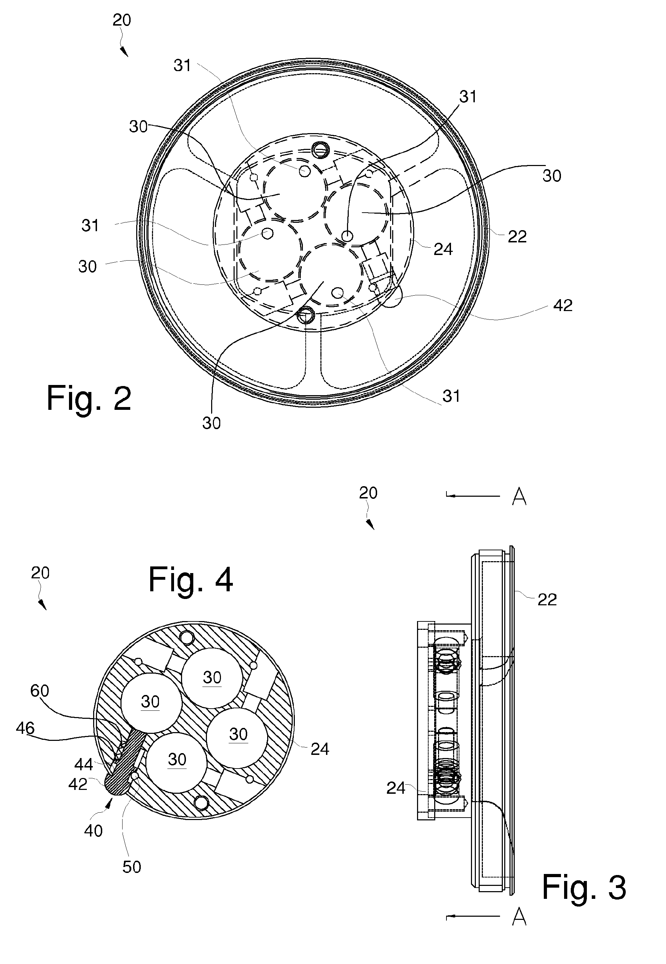

The plug 20 is shown in detail in Figs. 2-4. It comprises a circular peripheral, e.g. threaded, portion 22 and a substantially cylindrical main body 24 which contains a closing mechanism of the plug 10 on the flange 80, and consequently on the container or tank which it is attached to. Note, however, that the flange 80 is optional, and useful in the assembly, but one could also directly shape the mouth or opening of the tank or container to fit it directly to the plug 20.

The aforementioned mechanism, described below, is controllable with an electromagnetic field, in this example a static magnetic field. For simplicity, given the symmetry of the structure, we describe and indicate only a portion of the mechanism.

The body 24 has inside four cylindrical cavities which house circular tops 30 equipped with permanent magnets 31 integral to them (only some shown). Every top 30 has a perimeter groove (not shown) into which can slide or not the innermost end of a plug-locking pin 40, housed in a cavity of the body 24, too.

The pin 40 is slidable for a short distance on the side of, and radially to, the top 40, and has a head 42 which can protrude from - or move back in - the lateral surface of the body 24. The head 42 can fit into the peripheral groove 86, thereby locking the plug 20 to the flange 80. The outermost end of the pin 40 comprises in order: the head 42, a waist 44 and a collar 46, on which abuts a spring 60 adapted to push the pin 40 towards the outside of the body 24 and away from the top 30. A pin 50 is placed inside the body 24 to stop inside the waist 44, so that it interferes with the collar 46 and retain the pin 40 in the body 24.

It depends on the angular position of the top 30, and hence on its perimetral groove, how much the pin 40 can move back into the body 24 against the spring 60. Only if the peripheral groove is in correspondence with the end of the pin 40, it can move back so far as to retract completely the head 24 within the body 24.

The plug 20, in the upper part in Fig. 1, comprises a seat 21 for an accessory block (not shown). The block will have inside permanent magnets that can interact with the magnets 31 when one inserts the key-block into the seat 21 Then the tops 30 will rotate under the action of the magnetic field to the position where their perimetral groove allows the maximum back-sliding of the pins 40, the heads 42 of which will be able to enter inside the body 24 while coming off the groove 86; and the plug 20 can be removed from the flange 80. When the key-block is removed, the tops lose their privileged position, and the heads 42, now forced to protrude from the body 24, constrain the plug 20 to the flange 80. The tops 30 preferably are provided with axial springs to push them away from the privileged, plug-opening position.

## Claims

1. Method for enabling or disabling a closing mechanism (30, 40) of a plug (20) on a container or tank, e.g. of a vehicle, wherein an electromagnetic field controls the mechanism.

2. Method according to claim 1, wherein the field is electrostatic or magnetostatic.

3. Method according to claim 1, wherein the field is oscillating.

4. Method according to any one of the preceding claims, wherein a movable member (40) enables or disables, or locks or unlocks, the plug, the movable member being directly influenced by the field.

5. Method according to any one of the preceding claims, wherein a movable member (40) enables or disables, or locks or unlocks, the plug, the movable member being actuated or enabled by an actuator element (30) which the field affects.

6. Plug (50) for containers or tanks, e.g. of a vehicle, comprising a closing mechanism (30, 40), **characterized in that** the mechanism is controllable by an electromagnetic field, e.g. an electrostatic or magnetostatic field.

7. Plug according to claim 6, comprising a movable member (40) adapted to enable or disable, or lock or unlock, the plug, the movable member being directly influencable by the field.

8. Plug according to claim 6 or 7, comprising a movable member (40) adapted to enable or disable, or lock or unlock, the plug, the movable member being actuated or enabled by an actuator element (30) operable via the field.

9. Plug according to claim 6 or 7 or 8, comprising an elastic element (60), e.g. a spring, adapted to return the movable member (40) in one of two positions: closing or opening position of the plug.

10. Use of an electromagnetic field, in particular electrostatic or magnetostatic, to open/close or lock/unlock a plug (20) on a tank of a vehicle or container.
